# EUROPÄISCHE PATENTSCHRIFT

(11) **EP 2 658 642 B1**
(45) Veröffentlichungstag und Bekanntmachung des Hinweises auf die Patenterteilung: **18.10.2017**
(21) Anmeldenummer: 11808223.9
(22) Anmeldetag: 28.12.2011
(51) Int. Cl.: B01J 8/00, B03C 1/00

(54) **VERFAHREN ZUR ABTRENNUNG VON MAGNETISIERBAREN KATALYSATORPARTIKELN MIT HILFE VON MAGNETFILTERN**
METHOD FOR SEPARATING MAGNETIZABLE CATALYST PARTICLES WITH THE AID OF MAGNETIC FILTERS
PROCÉDÉ DE SÉPARATION DE PARTICULES DE CATALYSEUR MAGNÉTISABLES, AU MOYEN DE FILTRES MAGNÉTIQUES

(30) Priorität: 29.12.2010 EP 10197231
(43) Veröffentlichungstag der Anmeldung: 06.11.2013
(73) Patentinhaber: BASF SE, 67056 Ludwigshafen am Rhein (DE)
(72) Erfinder: KUHNKE, Frank, 67063 Ludwigshafen (DE); HEILEK, Jörg, 69245 Bammental (DE); RIECK, Daniela, 55232 Alzey (DE)
(74) Vertreter: BASF IP Association
(86) Internationale Anmeldenummer: PCT/EP2011/074116
(87) Internationale Veröffentlichungsnummer: WO 2012/089745

(56) Entgegenhaltungen:
- CN-B- 101 480 549
- DE-A1- 2 036 277
- DE-A1- 10 025 964
- JP-A- 60 137 439
- US-A- 4 605 678
- US-A1- 2009 065 437
- GEORGE M. WHITESIDES ET AL.: "Magnetic filtration of small heterogeneous catalyst particles. Preparation of ferrimagnetic catalyst support", I & EC PROCESS DESIGN & DEVELOPMENT, Bd. 15, Januar 1976 (1976-01), Seite 226, XP002673939,

## Beschreibung

Die vorliegende Erfindung betrifft ein Verfahren, umfassend mindestens die Schritte (A) chemische Reaktion mindestens einer organischen Verbindung in Gegenwart mindestens eines heterogenen Katalysators in einem Reaktionsgemisch, und (B) Abtrennen des mindestens einen heterogenen Katalysators mit einem Magnetfilter, sowie die Verwendung eines Magnetfilters zum Abtrennen von Katalysatorpartikeln in einem Verfahren zur Hydrierung wenigstens einer organischen Verbindung.

Verfahren zum Abtrennen von Katalysator-Partikeln aus Reaktionsmischungen sind aus dem Stand der Technik bereits bekannt.

DE 1 081 20 offenbart ein Verfahren zur Hydrierung von Adipodinitril und epsilon-Amino-capronitril zu Hexamethylendiamin mithilfe eines suspendierten Raney-Katalysators unter erhöhtem Druck. Nach Umsetzung der genannten organischen Verbindungen kann die katalysatorreiche Suspension mittels eines Zyklons oder eines Magnetscheiders von in Suspension befindlichen Katalysatorpartikeln befreit werden.

CA 2,328,391 A1 offenbart ein Verfahren zur Abtrennung flüssiger Bestandteile einer Suspension. Dazu wird die Suspension, die beispielsweise aus chemischen Reaktionen wie Dehydrierungen, Hydrierungen, Transhydrierungen, Aromatisierungen, Hydrodenitrierungen, stammt, zunächst mittels Filtrieren, Dekantieren, Separierung durch einen Hydrozyklon, etc., behandelt, anschließend wird eine magnetische Abscheidung durchgeführt.

WO 2008/000808 A1 offenbart ein Verfahren, beispielsweise eine Hydroformylierung, Carbonylierung, Olefin-Oligomerisierung und Polymerisationsreaktionen, in denen Katalysatoren enthaltend Kobalt, Nickel oder Eisen eingesetzt werden. Nach durchgeführter chemischer Reaktion werden die festen Katalysatoranteile mittels Magnetfiltern abgetrennt.

Im Stand der Technik sind keine Verfahren vorbeschrieben, die es ermöglichen, die Reaktionsmischung fast vollständig von festen Katalysatorteilchen zu befreien, um besonders reine Reaktionsmischungen zu erhalten. Bezüglich der Reinheit der erhaltenen Reaktionsmischungen sind die Verfahren des Standes der Technik daher noch zu verbessern. Dazu ist es insbesondere notwendig, den Schritt des Abtrennens der suspendierten heterogenen Katalysatorpartikel zu verbessern, um so Reaktionsgemische zu erhalten, die eine besonders hohe Reinheit aufweisen, so dass in weiteren Aufarbeitungsschritten des Reaktionsgemisches, beispielsweise bei einer destillativen Aufarbeitung, Nachteile wie Belegung der Destillationskolonnen mit Katalysator bzw. Verstopfung der Zu- und/oder Ableitungen vermieden werden können.

Aufgabe der vorliegenden Erfindung ist es daher, ein Verfahren zur Umsetzung organischer Verbindungen in Gegenwart eines heterogenen Katalysators bereitzustellen, welches es ermöglicht, die Reaktionsmischung, d. h. den Reaktionsaustrag, in einer besonders hohen Reinheit, insbesondere frei von verbliebenen Katalysatorpartikeln, zu erhalten. Eine weitere Aufgabe ist es, ein entsprechendes Verfahren bereitzustellen, welches es ermöglicht, dass sich an das Verfahren anschließende Schritte, insbesondere Aufarbeitung der Reaktionsmischung durch Destillation, vorteilhaft durchführen lassen. Insbesondere ist es eine Aufgabe der vorliegenden Erfindung, ein entsprechendes Verfahren bereit zu stellen, bei dem bei der Aufarbeitung des Reaktionsgemisches durch Destillation die dazu verwendeten Destillationskolonnen nicht durch im Reaktionsgemisch vorhandene Katalysatorreste negativ beeinflusst werden, beispielsweise indem sich Katalysatorreste in den Destillationskolonnen ablagern. Eine weitere Aufgabe ist es, die Bildung von unerwünschten Nebenprodukten während der Aufarbeitung des Produktes, beispielsweise während einer Destillation, zu unterdrücken.

Diese Aufgaben werden erfindungsgemäß gelöst durch das Verfahren, umfassend mindestens die Schritte:
(A) Chemische Reaktion mindestens einer organischen Verbindung in Gegenwart mindestens eines heterogenen Katalysators in einem Reaktionsgemisch, dadurch gekennzeichnet, dass in Schritt (A) Adipodinitril (ADN) zu Hexamethylendiamin (HMD) oder 6-Aminocapronitril (6-ACN) und Hexamethylendiamin (HMD) hydriert, dass der mindestens eine heterogene Katalysator ein Metall, ausgewählt aus der Gruppe bestehend aus NI, Fe, Co und Mischungen davon, enthält und dass der mindestens eine heterogene Katalysator eine Partikelgrö-ßen-Verteilung von 0,1 bis 5000 µm, bevorzugt 1 bis 1000 µm, besonders bevorzugt 1 bis 100 µm aufweist, und
(B) Abtrennen des mindestens einen heterogenen Katalysators mit einem Magnetfilter, wobei der Magnetfilter ein rückspulbarer Magnetfilter, beispielsweise ein Hochgradient-Magnetfilter oder Automag Magnetfilter, oder ein Nasstrommelscheider ist und der Gehalt an mindestens einem heterogenen Katalysator in dem Reaktionsgemisch, welches in Schritt (B) des erfindungsgemäßen Verfahrens eingesetzt wird, bevorzugt 5 bis 10000 Gew.-ppm, besonders bevorzugt 10 bis 1000 Gew.-ppm, ganz besonders bevorzugt etwa 20 bis 500 Gew.-ppm, jeweils bezogen auf die zu behandelnde Reaktionsmischung, beträgt, wobei vor Schritt (B) ein Teil des mindestens einen heterogenen Katalysators abgetrennt wird und das Abtrennen vor Schritt (B) durch Abtrennung im Zentrifugalfeld erfolgt.
Das erfindungsgemäße Verfahren wird im Folgenden detailliert erläutert.

### Schritt (A):

Die vorliegende Erfindung betrifft das erfindungsgemäße Verfahren, wobei in Schritt (A) Adipodinitril (ADN) zu Hexamethylendiamin (HMD) oder 6-Aminocapronitril (6-ACN) und Hexamethylendiamin (HMD) hydriert wird.
Verfahren zum Hydrieren von Adipodinitril sind dem Fachmann an sich bekannt und beispielsweise in H. J. Arpe, Industrielle organische Chemie, 6. Aufl., S. 275, Wiley-VCH-Verlag, beschrieben.
Hexamethylendiamin (HMD) stellt ein wichtiges Monomer dar, beispielsweise zur Herstellung von Polyamiden. Aus Adipinsäure und Hexamethylendiamin kann durch Polykondensation Polyamid-6.6 ("Nylon") hergestellt werden. Durch Umsetzung von Hexamethylendiamin mit Phosgen erhält man das Diisocyanat, das als Komponente zur Herstellung von Polyurethan-Harzen und -Schaumstoffen dienen kann.

Erfindungsgemäß kann daher in Schritt (A) des erfindungsgemäßen Verfahrens Hexamethylendiamin durch katalytische Flüssigphasen-Hydrierung von Adipodinitril in Gegenwart von Eisen-, Kobalt- oder NickelKatalysatoren hergestellt werden.
In einer bevorzugten Ausführungsform von Schritt (A) des erfindungsgemäßen Verfahrens wird Adipodinitril in einem Hochdruckverfahren zu Hexamethylendiamin umgesetzt, beispielsweise bei einer Temperatur von 100 bis 200 °C, einem Druck von 200 bis 400 bar, in Gegenwart von Ammoniak als Lösungsmittel und einem Eisen enthaltenden Katalysator-Festbett.
In einer weiteren bevorzugten Ausführungsform von Schritt (A) des erfindungsgemäßen Verfahrens wird Adipodinitril zu Hexamethylendiamin in einem Niederdruck-Suspensions-Verfahren umgesetzt. Dieses Verfahren wird beispielsweise bei 60 bis 100 °C und beispielsweise 20 bis 50 bar (Druck) durchgeführt, bevorzugt in Gegenwart von mit Alkali modifiziertem Raney-Nickel und Hexamethylendiamin als Lösungsmittel.
In der erfindungsgemäß bevorzugt durchgeführten Hydrierung von organischen Verbindungen kann im Allgemeinen jedes geeignete Reduktionsmittel eingesetzt werden.

Bevorzugt wird in Schritt (A) des erfindungsgemäßen Verfahrens Wasserstoff als Reduktionsmittel eingesetzt.

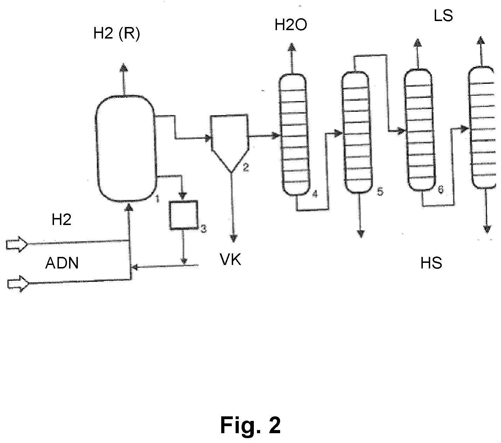

Nach beiden bevorzugten Ausführungsformen von Schritt (A) des erfindungsgemäßen Verfahrens entsteht Hexamethylendiamin beispielsweise mit einer Selektivität von 99 % bei einem Umsatz von beispielsweise 99 %. Die Hydrierung von Adipodinitril zu Hexamethylendiamin ist stark exotherm, siehe auch Winnacker/Küchler, Chemische Technik, Band 5, Organische Zwischenverbindungen, Polymere, 5. Aufl., Wiley-VCH-Verlag 2005, Seiten 242 und 244, sowie Abbildung 9.2 auf Seite 243. Siehe auch Figur 2.

In Schritt (A) des erfindungsgemäßen Verfahrens wird eine chemische Reaktion in Gegenwart von mindestens einem heterogenen Katalysator durchgeführt.

Im Allgemeinen können in das erfindungsgemäße Verfahren alle dem Fachmann bekannten, heterogenen Katalysatoren eingesetzt werden. Der erfindungsgemäße mindestens eine heterogene Katalysator ist erfindungsgemäß bevorzugt ferromagnetisch, um in Schritt (B) eine magnetische Abtrennung zu ermöglichen. Besonders bevorzugt liegt der mindestens eine heterogene Katalysator in emulgierter oder suspendierter Form vor.

Beispielsweise können die heterogenen Katalysatoren katalytisch aktive Metalle, ausgewählt aus der Gruppe bestehend aus Nickel, Kobalt, Eisen und Mischungen davon, enthalten.

Die vorliegende Erfindung betrifft daher insbesondere das erfindungsgemäße Verfahren, wobei der mindestens eine heterogene Katalysator ein Metall, ausgewählt aus der Gruppe bestehend aus Ni, Fe, Co und Mischungen davon, enthält.

Die katalytisch aktiven Metalle, insbesondere die bevorzugt genannten Metalle, können dabei in elementarer Form vorliegen. Liegt der heterogene Katalysator in elementarer Form vor, so liegt er bevorzugt in Form von Partikeln vor, beispielsweise mit einer Partikelgrößen-Verteilung von 0,1 bis 5000 µm, bevorzugt 1 bis 1000 µm, besonders bevorzugt 1 bis 100 µm. Diese Größenbereiche gelten erfindungsgemäß auch für Agglomerate, die gegebenenfalls in einem zusätzlichen Schritt aus den Partikeln gebildet werden, d. h. auch wenn sich die Teilchengröße durch Agglomeration erhöht, liegt die Größe der gebildeten Agglomerate erfindungsgemäß weiterhin in dem genannten Bereich. In einer weiteren bevorzugten Ausführungsform sind diese bevorzugt vorliegenden Partikel in dem Reaktionsgemisch gemäß Schritt (A) des erfindungsgemäßen Verfahrens suspendiert.

Beispielsweise können die heterogenen Katalysatoren in Form des so genannten Raney-Metalls vorliegen. Diese Ausführungsform eines heterogenen Katalysators ist dem Fachmann an sich bekannt. Insbesondere liegt Nickel in Form von Raney-Nickel, Kobalt in Form von Raney-Kobalt und Eisen in Form von Raney-Eisen vor, siehe beispielsweise Römpp Chemie Lexikon, 9 Auflage, Band 5, Seite 3785, Spalte 2, Georg Thieme Verlag Stuttgart, New York.

In einer bevorzugten Ausführungsform von Schritt (A) des erfindungsgemäßen Verfahrens liegt als heterogener Katalysator Nickel in Form von Raney-Nickel und/oder Kobalt in Form von Raney-Kobalt vor.

In einer weiteren bevorzugten Ausführungsform des erfindungsgemäßen Verfahrens liegt der heterogene Katalysator als Festbett im Reaktionsgemisch vor. Ein Katalysatorträger ist dabei bevorzugt nicht enthalten. Der Katalysatorvorläufer enthält beispielsweise Eisen-, Kobalt und/oder Nickeloxide, die vor der chemischen Reaktion in Schritt (A) zu den entsprechenden Metallen reduziert werden. Bevorzugt erfolgt diese Reduktion mit Wasserstoff.

In dieser Ausführungsform liegt der heterogene Katalysator bevorzugt im Reaktor, in dem die chemische Reaktion gemäß Schritt (A) des erfindungsgemäßen Verfahrens durchgeführt wird, fest angeordnet vor. Zusätzlich kann ein Teil des heterogenen Katalysators in dieser Ausführungsform auch im Reaktionsgemisch suspendiert sein.

Die im erfindungsgemäßen Verfahren vorliegenden heterogenen Katalysatoren sind in einer weiteren bevorzugten Ausführungsform auf entsprechendes Trägermaterial, beispielsweise Metall- und/oder Halbmetalloxide, Zeolithe, Aktivkohle, Keramiken, etc., aufgebracht und in der Reaktionsmischung, insbesondere in einem flüssigen Reaktionsmedium, suspendiert oder fest angeordnet. Die katalytisch aktiven Metalle liegen dabei bevorzugt in metallischer Form auf dem Trägermaterial vor.

Der erfindungsgemäß vorliegende mindestens eine heterogene Katalysator weist im Allgemeinen eine Partikelgrößen-Verteilung von 0,1 bis 5000 µm, bevorzugt 1 bis 1000 µm, besonders bevorzugt 1 bis 100 µm auf. Diese Größenbereiche beziehen sich erfindungsgemäß sowohl auf Partikel als auch auf gegebenenfalls gebildete Agglomerate.

Die vorliegende Erfindung betrifft daher bevorzugt das erfindungsgemäße Verfahren, wobei der mindestens eine heterogene Katalysator eine Partikelgrößen-Verteilung von 0,1 bis 5000 µm, bevorzugt 1 bis 1000 µm, besonders bevorzugt 1 bis 100 µm aufweist.

Schritt (A) des erfindungsgemäßen Verfahrens umfasst eine chemische Reaktion, die in einem Reaktionsgemisch stattfindet. Das Reaktionsgemisch wird dabei mindestens aus den in der chemischen Reaktion umzusetzenden organischen Verbindungen, ggf. weiteren Reagenzien, beispielsweise in flüssiger, fester, gelöster, suspendierter oder gasförmiger Form, dem mindestens einen heterogenen Katalysator und während der chemischen Reaktion gebildeten Produkten gebildet. In einer möglichen Ausführungsform von Schritt (A) des erfindungsgemäßen Verfahrens enthält das Reaktionsgemisch zusätzlich mindestens ein Lösungsmittel. Das Lösungsmittel kann im Prinzip aus allen dem Fachmann bekannten Lösungsmitteln, beispielsweise anorganischen Lösungsmitteln, beispielsweise Wasser oder flüssiger Ammoniak, oder organischen Lösungsmitteln, beispielsweise Alkohole, offenkettige und zyklische Ether, Alkane und Mischungen davon ausgewählt werden.

Bei der in Schritt (A) des erfindungsgemäßen Verfahrens durchgeführten Hydrierung von Adipodinitril zu Hexamethylendiamin oder 6-Aminocapronitril und Hexamethylendiamin wird bevorzugt kein Lösungsmittel zugesetzt. Wird doch ein Lösungsmittel zugesetzt, so kann dieses aus den oben genannten ausgewählt werden.
Schritt (A) des erfindungsgemäßen Verfahrens erfolgt beispielsweise kontinuierlich oder diskontinuierlich, bevorzugt kontinuierlich.
In dem Reaktionsgemisch gemäß Schritt (A) des erfindungsgemäßen Verfahrens liegt der mindestens eine heterogene Katalysator im Allgemeinen in einer Menge vor, die dem Fachmann als geeignet bekannt ist, beispielsweise 1 bis 50 Gew.-%, bevorzugt 2 bis 40 Gew.-%, besonders bevorzugt 5 bis 30 Gew.-% jeweils bezogen auf das gesamte Reaktionsgemisch.
In einer bevorzugten Ausführungsform des erfindungsgemäßen Verfahrens wird nach Schritt (A) und vor dem erfindungsgemäßen Schritt (B) ein Teil des mindestens einen heterogenen Katalysators abgetrennt.

Daher betrifft die vorliegende Erfindung das erfindungsgemäße Verfahren, wobei vor Schritt (B) ein Teil des mindestens einen heterogenen Katalysators abgetrennt wird.

Im Rahmen der vorliegenden Erfindung bedeutet "ein Teil" beispielsweise 80 bis 99,99 Gew.-% der Gesamtmenge an vorliegendem mindestens einem heterogenen Katalysator, bevorzugt 90 bis 99,99 Gew.-%, besonders bevorzugt 95 bis 99,99 Gew.-%.

Dieser erfindungsgemäß durchgeführte erste Abtrennschritt gemäß dem vorliegenden Verfahren wird beispielsweise durchgeführt, um einen Großteil des mindestens einen heterogenen Katalysators nach Schritt (A) und vor Schritt (B) abzutrennen. Im erfindungsgemäßen Verfahren erfolgt das Abtrennen vor Schritt (B) durch Abtrennung im Zentrifugalfeld, beispielsweise mittels Tellerseparator, Hydrozyklon, Dekanter-Zentrifuge, Vollmantelschneckenzentrifuge, Siebdekanter, Schälzentrifuge, Stülpfilterzentrifuge, Taumelzentrifuge, Schubzentrifuge, etc., durch Siebung, beispielsweise mittels Schwingsieb, Schwingrinne, Bogensieb, etc., oder Kombinationen davon.

Die vorliegende Erfindung betrifft daher das erfindungsgemäße Verfahren, wobei das Abtrennen vor Schritt (B) durch Abtrennung im Zentrifugalfeld, erfolgt. Bevorzugt betrifft die vorliegende Erfindung das erfindungsgemäße Verfahren, wobei das Abtrennen vor Schritt (B) mit mindestens einem Hydrozyklon erfolgt.

Weiter bevorzugt betrifft die vorliegende Erfindung das erfindungsgemäße Verfahren, wobei das Abtrennen vor Schritt (B) mit einem Klärbehälter/Absetzbehälter und einem Hydrozyklon erfolgt.
Erfindungsgemäß bevorzugt wird eine Kombination von Klärbehälter/Absetzbehälter und Hydrozyklon verwendet. Des Weiteren kann das Reaktionsgemisch mit dem Fachmann an sich bekannten Schritten behandelt werden, beispielsweise können gasförmige Komponenten des Reaktionsgemisches durch Absenken des Drucks abgetrennt werden.
In einer bevorzugten Ausführungsform wird das nach der in Schritt (A) des erfindungsgemäßen Verfahrens stattfindenden chemischen Reaktion erhaltene Reaktionsgemisch, enthaltend beispielsweise die in der chemischen Reaktion umzusetzende organische Verbindung, ggf. weitere Reagenzien, beispielsweise in flüssiger, fester, gelöster, suspendierter oder gasförmiger Form, den mindestens einen heterogenen Katalysator und während der chemischen Reaktion gebildete Produkte, gegebenenfalls in einem entsprechenden Lösungsmittel, bevorzugt durch einen Klärbehälter und einen ersten Hydrozyklon von einem Teil des Katalysators befreit.
Im Rahmen der vorliegenden Erfindung bedeutet die Formulierung "einen ersten Hydrozyklon" entweder ein einzelner erster Hydrozyklon, oder bevorzugt eine Formation von parallel betriebenen Hydrozyklonen, beispielsweise mindestens zwei, bevorzugt beispielsweise fünf Hydrozyklone. Mehrere parallel betriebene Hydrozyklone werden beispielsweise in Abhängigkeit von der zu behandelnden Reaktionsmischung eingesetzt. Beispielweise wird für eine Kapazität von 120 kt/a eine Hydrozyklonstufe aus fünf parallel betriebenen Hydrozyklonen eingesetzt. Bei allen bezüglich der vorliegenden Erfindung genannten Apparaturen zur Abtrennung können erfindungsgemäß mehrere gleiche Apparaturen parallel verschaltet werden, um die entsprechende Menge an Reaktionsmischung behandeln zu können.

Hydrozyklone sind dem Fachmann an sich bekannt, und beispielsweise beschrieben in Römpp Chemie Lexikon, 9. erweiterte und neu bearbeitete Auflage, 1990, Seite 1912, G. Thieme Verlag Stuttgart New York.

In einer bevorzugten Ausführungsform wird erst mindestens ein Klärbehälter, dann mindestens ein erster Hydrozyklon verwendet. Es wird dabei ein Oberlauf des ersten Hydrozyklons erhalten, der erfindungsgemäß bevorzugt einen niedrigen Gehalt an mindestens einem heterogenen Katalysator von 5 bis 10000 Gew.-ppm, besonders bevorzugt 10 bis 1000 Gew.-ppm, ganz besonders bevorzugt etwa 20 bis 500 Gew.-ppm, aufweist, jeweils bezogen auf die Reaktionsmischung, die im Oberlauf des ersten Hydrozyklonen erhalten wird. Dieser Strom wird bevorzugt Schritt (B) zugeführt, d. h. Abtrennen des verbliebenen mindestens einen heterogenen Katalysators durch einen Magnetfilter. Des Weiteren wird ein Unterlauf erhalten, der den Teil des mindestens einen heterogenen Katalysators enthält, der in diesem erfindungsgemäß bevorzugten Abtrennschritt abgetrennt wird. Um den mindestens einen heterogenen Katalysator auszuschleusen oder zurückzugewinnen und bevorzugt wieder in Schritt (A) des erfindungsgemäßen Verfahrens zurück zuführen, wird dieser Unterlauf erfindungsgemäß bevorzugt mindestens einem zweiten Hydrozyklon zugeführt. Es wird hier ein zweiter Oberlauf erhalten, der beispielsweise Lösungsmittel, Edukt und/oder Produkt enthalten kann. Des Weiteren wird ein zweiter Unterlauf erhalten, der einen Großteil an mindestens einem heterogenen Katalysator enthält. Dieser kann, gegebenenfalls nach Aufarbeitung, wieder in Schritt (A) des erfindungsgemäßen Verfahrens eingesetzt werden. Weiter bevorzugt wird der Oberlauf des zweiten Hydrozyklons dem Zulauf des ersten Hydrozyklons zu gefahren, um dadurch mehr Produkt der nachfolgenden Destillationsstufe zufahren zu können.
In einer bevorzugten Ausführungsform liegt nach der erfindungsgemäß bevorzugten Abtrennung eines Teils des mindestens einen heterogenen Katalysators die verbliebene Restmenge des mindestens einen heterogenen Katalysators, insbesondere des Eisen-, Kobalt- und Nickel-Katalysators, partikulär verteilt im Reaktionsgemisch vor. In einer bevorzugten Ausführungsform enthält dieses Reaktionsgemisch gegebenenfalls Lösungsmittel, wobei dieses auch in einem weiteren Schritt abgetrennt werden kann, und überwiegend das gewünschte Produkt der chemischen Reaktion gemäß Schritt (A), besonders bevorzugt das gewünschte Hydrierprodukt. Das Reaktionsgemisch kann nach der bevorzugten Abtrennung eines Teils des mindestens einen heterogenen Katalysators auch noch nicht umgesetzte Ausgangs- oder Zwischenprodukte und/oder 0,1 bis 50 Gew.-% Wasser, bevorzugt 0,5 bis 40 Gew.-%, besonders bevorzugt 1 bis 30 Gew.-% Wasser, jeweils bezogen auf das gesamte Reaktionsgemisch, enthalten.
In einer bevorzugten Ausführungsform des erfindungsgemäßen Verfahrens wird dieses Reaktionsgemisch, von dem bevorzugt ein Teil des mindestens einen heterogenen Katalysators und gegebenenfalls Lösungsmittel abgetrennt worden ist, direkt in Schritt (B) des erfindungsgemäßen Verfahrens überführt. Bei der erfindungsgemäß bevorzugten Verwendung eines Klärbehälters und eines Hydrozyklons entspricht dieser Strom, der in Schritt (B) des erfindungsgemäßen Verfahrens überführt wird, bevorzugt dem Oberlauf des Klärbehälters oder dem Oberlauf des ersten Hydrozyklons.
Nach dem bevorzugt durchgeführten Abtrennen eines Teils des mindestens einen heterogenen Katalysators aus dem Reaktionsgemisch vor Schritt (B) des erfindungsgemäßen Verfahrens, beträgt der Gehalt an mindestens einem heterogenen Katalysator in dem Reaktionsgemisch, welches in Schritt (B) des erfindungsgemäßen Verfahrens eingesetzt wird, bevorzugt 5 bis 10000 Gew.-ppm, besonders bevorzugt 10 bis 1000 Gew.-ppm, ganz besonders bevorzugt etwa 20 bis 500 Gew.-ppm, jeweils bezogen auf die zu behandelnde Reaktionsmischung.
In einer weiteren bevorzugten Ausführungsform wird der in der Reaktionsmischung gemäß Schritt (A) vorliegende mindestens eine heterogene Katalysator agglomeriert.
In einer weiteren bevorzugten Ausführungsform wird der in der Reaktionsmischung gemäß Schritt (A) vorliegende mindestens eine heterogene Katalysator nach Abtrennen eines Teils des mindestens einen heterogenen Katalysators aus dem Reaktionsgemisch agglomeriert.
Daher betrifft die vorliegende Erfindung bevorzugt das erfindungsgemäße Verfahren, wobei der in der Reaktionsmischung gemäß Schritt (A) vorliegende mindestens eine heterogene Katalysator, bevorzugt nach Abtrennen eines Teils des mindestens einen heterogenen Katalysators aus dem Reaktionsgemisch, agglomeriert wird.
Agglomeration bedeutet im Rahmen der vorliegenden Erfindung, dass kleine Teilchen, d. h. die Partikel des heterogenen Katalysators, zu größeren Teilchen, d. h. Agglomeraten, aufgrund anziehender Wechselwirkungen, zusammenfinden.
In einer besonders bevorzugten Ausführungsform erfolgt das erfindungsgemäße Agglomerieren des in der Reaktionsmischung gemäß Schritt (A) vorliegenden mindestens einen heterogenen Katalysators nach Schritt (A), d. h. nach Beendigung der in Schritt (A) durchgeführten chemischen Reaktion. In einer weiteren bevorzugten Ausführungsform des erfindungsgemäßen Verfahrens erfolgt das erfindungsgemäße Agglomerieren des in der Reaktionsmischung gemäß Schritt (A) vorliegenden mindestens einen heterogenen Katalysators vor Schritt (B).
Durch die erfindungsgemäß bevorzugt durchgeführte Agglomeration der Katalysatorpartikel zu größeren Agglomeraten lässt sich die erfindungsgemäße Abtrennbarkeit des mindestens einen heterogenen Katalysators aus der Reaktionsmischung weiter verbessern, wodurch sich der Abtrennungsgrad in Schritt (B) des erfindungsgemäßen Verfahrens weiter steigern lässt. Ein weiterer Vorteil der erfindungsgemäßen, optionalen Agglomeration der Katalysatorpartikel besteht darin, dass zur Abtrennung der gebildeten Agglomerate einfacher ausgestaltete und daher kostengünstigere Magnetfilter, beispielsweise rückspülbare Magnetfilter, insbesondere Automag Magnetfilter, in Schritt (B) des erfindungsgemäßen Verfahrens eingesetzt werden können.

Die erfindungsgemäß gegebenenfalls durchgeführte Agglomeration der Katalysatorpartikel, die in dem Reaktionsgemisch aus Schritt (A) des erfindungsgemäßen Verfahrens vorliegen, kann im Allgemeinen durch alle dem Fachmann bekannte Verfahren erfolgen.

Beispielsweise kann die Agglomeration der Katalysatorpartikel erfindungsgemäß dadurch erfolgen, dass das die Katalysatorpartikel enthaltende Reaktionsgemisch aus Schritt (A) langsam gerührt wird, so dass die einzelnen Partikel miteinander in Kontakt treten und agglomerieren können.

Im Rahmen der vorliegenden Erfindung bedeutet der Begriff "langsames Rühren", dass während des Rührens der Leistungseintrag beispielsweise 0,05 bis 0,5 kW/m³ beträgt und/oder die Umfangsgeschwindigkeit am äußeren Rührerumfang (Tipp-Speed) beispielsweise 0,1 bis 1 m/s beträgt.

Die erfindungsgemäß gegebenenfalls durchgeführte Agglomeration der Katalysatorpartikel kann beispielsweise mit einem dem Fachmann bekannten Scheibenrüher, der bevorzugt in einem ausreichenden Abstand zum Behälter-Boden angebracht ist, erfolgen. Ein "ausreichender Abstand" im Rahmen der vorliegenden Erfindung bedeutet beispielsweise, dass sich bereits agglomerierte Partikel am Boden absetzen können, ohne wieder aufgewirbelt zu werden, beispielsweise kann der Abstand zwischen Scheibenrührer und Boden 1 m betragen.

In einer weiter bevorzugten Ausführungsform sind dem Fachmann bekannte Strömungsbrecher in ausreichendem Abstand zum Behälterboden angebracht und/oder der Behälterboden weist eine konische Form auf.

In einer weiteren erfindungsgemäßen Ausführungsform erfolgt das Rühren zur Agglomeration der Partikel in einem Behälter, der einen konischen doppelten Boden aufweist. In dieser erfindungsgemäßen Ausführungsform ist in dem Behälter in einem Abstand vom Boden ein zweiter konischer Boden angebracht, wobei lediglich in dem Raum oberhalb dieses zweiten Bodens gerührt wird, Agglomerate, die sich bevorzugt im oberen Raum bilden, sedimentieren und gelangen durch ein entsprechend ausgeführtes Loch in dem zweiten Boden in den Raum zwischen erstem und zweitem Boden. Die Größe des Lochs kann durch den Fachmann bestimmt werden und richtet sich bevorzugt nach der Menge an gerührtem Reaktionsgemisch, der Menge an zu agglomerierenden Katalysatorpartikeln und der Größe der gebildeten Agglomerate. Beispielsweise beträgt der Durchmesser des in dem zweiten Boden vorhandenen Lochs 0,02 bis 0,3 m.
In einer weiteren erfindungsgemäßen Ausführungsform kann die Agglomeration der Katalysatorpartikel dadurch erfolgen, dass dem Reaktionsgemisch aus Schritt (A) mindestens ein Flockungsmittel zugesetzt wird. Beispiele für dem Fachmann bekannte Flockungsmittel sind beispielsweise die Sedipur®-Produkte. Je nach Zusammensetzung des Flockungsmittels kann dieses entweder anionisch, kationisch oder nichtionisch sein. Beispiele für anionische Flockungsmittel sind anionische, substituierte Polyacrylamide mit niedrigen oder hohen Molekularmassen. Beispiele für nichtionische Flockungsmittel sind nichtionische Polyacrylamide. Beispiele für kationische Flockungsmittel sind kationische, substituierte Polyacrylamide, Polyethylenimine, Polyamine oder PolyDADMAC (Polydiallyldimethylammoniumchlorid). Das mindestens eine Flockungsmittel wird in einer dem Fachmann bekannten Menge zugesetzt, beispielsweise 10 bis 5000 Gew.-ppm, bevorzugt 50 bis 1000 Gew.-ppm, besonders bevorzugt 50 bis 200 Gew.-ppm, jeweils bezogen auf das in der chemischen Reaktion mindestens einer organischen Verbindung in Schritt (A) des erfindungsgemäßen Verfahrens erhaltene Produkt, beispielsweise Hexamethylendiamin (HMD). Beispielsweise wird das gegebenenfalls verwendete mindestens eine Flockungsmittel als 1 Gew.-%-ige Lösung, bevorzugt in Wasser, zugesetzt. Mindestens ein Flockungsmittel kann dann zur Agglomeration eingesetzt werden, wenn es das in Schritt (A) gebildete Produkt oder das erfindungsgemäße Verfahren an sich nicht stört.
Die vorliegende Erfindung betrifft daher weiter bevorzugt das erfindungsgemäße Verfahren, wobei die Agglomeration der Katalysatorpartikel dadurch erfolgt, dass das die Katalysatorpartikel enthaltende Reaktionsgemisch aus Schritt (A) langsam gerührt wird und/oder mindestens ein Flockungsmittel zugegeben wird.

### Schritt (B):

Schritt (B) des erfindungsgemäßen Verfahrens umfasst das Abtrennen des mindestens einen heterogenen Katalysators mit einem rückspülbaren Magnetfilter, beispielsweise ein Hochgradient-Magnetfilter oder ein Automag Magnetfilter, oder einem Nasstrommelscheider.

Schritt (B) des erfindungsgemäßen Verfahrens wird durchgeführt, um ein Reaktionsgemisch zu erhalten, welches einen besonders niedrigen Restgehalt an mindestens einem heterogenen Katalysator aufweist. Durch die erfindungsgemäß Verwendung eines rückspülbaren Magnetfilters, beispielsweise ein Hochgradient-Magnetfilter oder ein Automag Magnetfilter, oder eines Nasstrommelscheiders gelingt es, eine Reaktionsmischung nach Schritt (B) zu erhalten, die einen besonders niedrigen Restgehalt an mindestens einem heterogenen Katalysator aufweist.
In einer bevorzugten Ausführungsform beträgt der Gehalt an mindestens einem heterogenen Katalysator in dem Reaktionsgemisch, welches in Schritt (B) des erfindungsgemäßen Verfahrens eingesetzt wird, bevorzugt 5 bis 10000 Gew.-ppm, besonders bevorzugt 10 bis 1000 Gew.-ppm, ganz besonders bevorzugt etwa 20 bis 500 Gew.-ppm, jeweils bezogen auf die zu behandelnde Reaktionsmischung.
Die vorliegende Erfindung betrifft daher bevorzugt das erfindungsgemäße Verfahren, wobei der Gehalt an mindestens einem heterogenen Katalysator in dem Reaktionsgemisch, welches in Schritt (B) des erfindungsgemäßen Verfahrens eingesetzt wird, bevorzugt 5 bis 10000 Gew.-ppm, besonders bevorzugt 10 bis 1000 Gew.-ppm, ganz besonders bevorzugt etwa 20 bis 500 Gew.-ppm, jeweils bezogen auf die zu behandelnde Reaktionsmischung, beträgt.
Der erfindungsgemäß abzutrennende mindestens eine heterogene Katalysator weist dabei üblicherweise eine Partikelgrößen-Verteilung von 0,1 bis 5000 µm, bevorzugt etwa 0,1 bis 1000 µm, besonders bevorzugt etwa 0,1 bis 100 µm auf.

Das Abtrennen gemäß Schritt (B) des erfindungsgemäßen Verfahrens erfolgt bevorzugt bei einer Temperatur von 0 bis 200 °C, bevorzugt 20 bis 100 °C. Das Abtrennen gemäß Schritt (B) des erfindungsgemäßen Verfahrens erfolgt bevorzugt bei einem Druck von 0,2 bis 200 bar (absolut), besonders bevorzugt 0,4 bis 50 bar (absolut), ganz besonders bevorzugt 1 bis 10 bar (absolut).
Das Abtrennen gemäß Schritt (B) des erfindungsgemäßen Verfahrens erfolgt kontinuierlich oder diskontinuierlich, bevorzugt kontinuierlich. Bei kontinuierlicher Vorgehensweise beträgt der Volumenstrom des zu filtrierenden Reaktionsaustrags im Allgemeinen 0,2 bis 10000 m³/h, bevorzugt 3 bis 1000 m³/h und besonders bevorzugt 5 bis 100 m³/h.
Die Viskosität des in Schritt (B) behandelten Reaktionsgemisches beträgt im Allgemeinen 0,05 bis 50 mPa*s, bevorzugt 0,6 bis 5 mPa*s, insbesondere 0,8 bis 2 mPa*s.

Die Abtrennung des mindestens einen heterogenen Katalysators erfolgt in Schritt (B) des erfindungsgemäßen Verfahrens unter Verwendung eines rückspülbaren Magnetfilters, beispielsweise ein Hochgradient-Magnetfilter oder ein Automag Magnetfilter, oder ein Nasstrommelscheider eingesetzt.

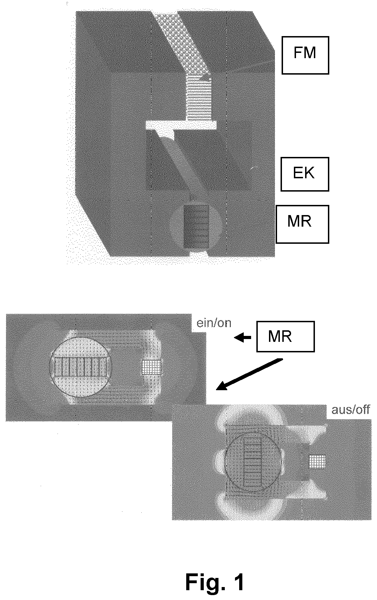

Die vorliegende Erfindung betrifft daher das erfindungsgemäße Verfahren, wobei der Magnetfilter ein rückspülbarer Magnetfilter, beispielsweise ein Hochgradient-Magnetfilter oder ein Automag Magnetfilter, oder ein Nasstrommelscheider ist. Rückspülbare Magnetfilter, beispielsweise Hochgradient-Magnetfilter oder Automag Magnetfilter, sind dem Fachmann an sich bekannt. Es handelt sich dabei um "schaltbare" Permanentmagnetfilter, deren Wirkung auf der Abscheidung von magnetisierbaren Partikeln in stark homogenen Magnetfeldern beruht.
Im eingeschalteten Zustand sind die Permanentmagnete dabei bevorzugt so ausgerichtet, dass sie den magnetischen Fluss zur Filterkammer durch ein Eisenjoch erzeugen. Die magnetische Flussdichte des Filters beträgt bei einem Polabstand von beispielsweise 25 mm beispielsweise ca. 0,3 T. In dieser Position erfolgt die Abscheidung der eisenhaltigen Teilchen aus der durchströmenden Flüssigkeit. Die Partikel werden im Magnetfeld dabei zu ferromagnetischen Kollektoren, zum Beispiel feinen Drähten aus dem Werkstoff X6Cr17, die auch als Filtermatrix bezeichnet werden, transportiert und dort akkumuliert, siehe auch Figur 1.
Bei Erreichen einer Grenzbeladung der Filtermatrix, d.h. bei einem nicht mehr betriebsgemäßen Druckverlust über die Filtermatrix beziehungsweise unzureichende Abscheidung von magnetisierbaren Partikeln aus der zu filtrierenden Suspension, wird kurzzeitig das Magnetfeld durch Drehung des Permanentmagneten abgeschaltet und die Filtermatrix mit einem Spülstoß abgereinigt. Dieser Rückspülstoß soll bevorzugt entgegen der Flussrichtung im Filtrat, mit organischen Komponenten oder Wasser erfolgen, kann jedoch auch in Flussrichtung der Filtration mit Wasser, organischen Komponenten oder Filtrat erfolgen. Der Rückspülstoß kann zum Beispiel durch eine Pumpe oder aus einem unter Überdruck stehenden, zum Beispiel mit einem Gaspolster überlagerten, Behälter erfolgen.
Die Magnetwirkung kann alternativ über Elektromagnete erzeugt werden, die bei der oben beschriebenen Rückspülung stromlos geschaltet werden. Erfindungsgemäß geeignete Hochgradient-Magnetfilter sind beispielsweise bei der Fa. Steinert erhältlich. Nasstrommelscheider sind dem Fachmann an sich auch bekannt. Die Flüssigkeit strömt dabei bevorzugt durch einen halbkreisförmigen Separationsraum unter einer Edelstahltrommel hindurch, an der die magnetisierbaren Teilchen gebunden werden. Das starke, hochgradiente Magnetfeld wird beispielsweise durch einen aus permanentmagnetischen Scheiben bestehenden Zylinder innerhalb der Trommel erzeugt. Die speziellen Permanentmagneten erzeugen besonders hohe Feldgradienten. Durch die Rotation der Trommel wird der Filterkuchen bevorzugt aus der Trübe und aus dem Magnetfeld nach oben bewegt. Trotz des starken Magnetfeldes im Separationsraum kann der Filterkuchen leicht ausgetragen werden, da der Zylinder mit dem Permanentmagneten bevorzugt konzentrisch in der rotierenden Trommel angeordnet ist. Dadurch ist das Magnetfeld im Separationsraum stark und in der Kuchenabnahmezone sehr schwach. Erfindungsgemäß geeignete Nasstrommelabscheider sind beispielsweise von der Fa. Steinert erhältlich.
Weiter bevorzugte Beispiele für rückspülbare Magnetfilter sind Automag Magnetfilter, insbesondere Automag skid AM6/SKID1 oder AM12/SKID1 der Fa. Eclipse Magnetics Ltd.
In der erfindungsgemäß bevorzugten Ausführungsform, können, vorausgesetzt der in der Reaktionsmischung gemäß Schritt (A) vorliegende mindestens eine heterogene Katalysator wird agglomeriert, bevorzugt bevor der erfindungsgemäße Schritt (B) erfolgt, neben den genannten Magnetfiltern auch einfacher gestaltete und daher kostengünstigere Magnetfilter eingesetzt werden, die dem Fachmann bekannt sind, beispielsweise rückspülbare Magnetfilter wie Automag skid AM6/SKID1 oder AM12/SKID1 der Fa. Eclpise Magnetics Ltd..
Nach dem erfindungsgemäßen Schritt (B) des erfindungsgemäßen Verfahrens wird eine Reaktionsmischung erhalten, die den mindestens einen heterogenen Katalysator in einer besonders niedrigen Konzentration enthält, beispielsweise 0,1 bis 100 Gew.-ppm, bevorzugt 0,1 bis 20 Gew.-ppm, besonders bevorzugt 0,1 bis 5 Gew.-ppm.
Dieser erfindungsgemäße besonders niedrige Gehalt an mindestens einem heterogenen Katalysator ermöglicht es, dass ein Aufarbeitungsschritt, beispielsweise eine Destillation des nach Schritt (B) erhaltenen Reaktionsgemisches, besonders vorteilhaft durchgeführt werden kann. Zum einen wird eine Ablagerung des mindestens einen heterogenen Katalysators bzw. Abbauprodukten davon in den Destillationskolonnen vermieden. Dadurch werden eine Reinigung der Destillationskolonne und ein damit verbundener Stillstand der Anlage vermieden. Des Weiteren wird die Bildung von unerwünschten Nebenprodukten, die durch Reaktionen aus dem gewünschten Produkt in Gegenwart des mindestens einen heterogenen Katalysators bzw. Abbauprodukten davon, während der Destillation, unterdrückt, so dass das gewünschte Produkt in höherer Ausbeute und Reinheit erhalten werden kann.

Des Weiteren wird durch die erfindungsgemäß Kombination einer ersten Abtrennung eines Teils des mindestens einen heterogenen Katalysators, beispielsweise mittels eines Klärbehälters und eines Hydrozyklons in Verbindung mit Schritt (B), Abtrennung des mindestens einen heterogenen Katalysators mit einem rückspülbaren Magnetfilter ein Verfahren bereitgestellt, welches im Vergleich zu bekannten Verfahren des Standes der Technik besonders wenig Energie verbraucht. Des Weiteren fallen bei dem erfindungsgemäßen Verfahren zusätzlich geringere Investitionskosten an.

In einer bevorzugten Ausführungsform des erfindungsgemäßen Verfahrens schließt sich an Schritt (B) der folgende Schritt (C) an:

### (C) Aufarbeitung des Reaktionsgemisches aus Schritt (B), bevorzugt durch Destillation, um das gewünschte Produkt der chemischen Reaktion in Schritt (A) zu erhalten.

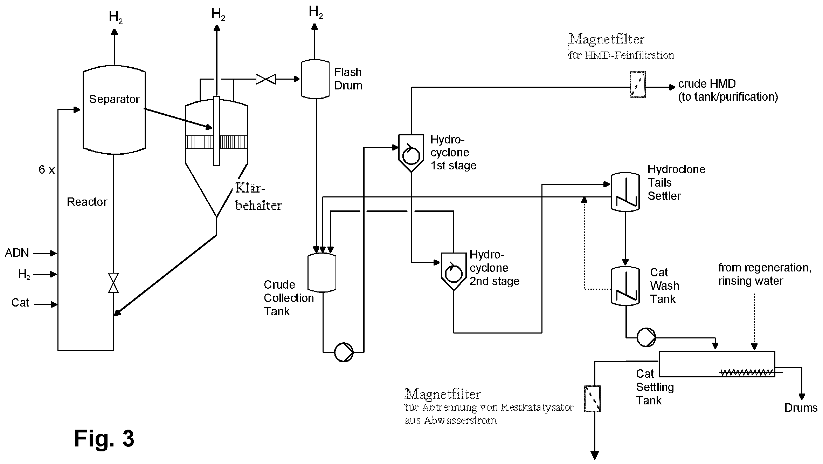

Verfahren zur Aufarbeitung von Reaktionsgemischen sind dem Fachmann an sich bekannt. Des Weiteren sind dem Fachmann Verfahren zur Destillation von Reaktionsgemischen an sich bekannt, und beispielsweise beschrieben in Winnacker Küchler, Chemische Technologie, 4. Auflage, 1984, Seiten 180-199, Carl-Hanser Verlag München Wien.
Im Folgenden wird eine besonders bevorzugte Ausführungsform des erfindungsgemäßen Verfahrens beschrieben, siehe auch Figur 3.
Aus der Hydrierung von Adipodinitril (ADN) mit Wasserstoff zu Hexamethylendiamin (HMD) oder 6-Aminocapronitril (6-ACN) und Hexamethylendiamin (HMD) wird eine Katalysatorsuspension mit 5 bis 30 Gew.-% Raney-Nickel erhalten. Diese wird zunächst einem Gasabscheide-Behälter zugeführt, aus dem ein Suspensionsstrom in einen Klärbehälter abläuft. Der untere Ablauf des Klärbehälters geht zurück in den Reaktor. Der geklärte obere Abzug entsprechend ca. 5 bis 20 % des Zulaufs enthält noch 10 bis 1000 Gew.-ppm Katalysator. Der Oberlauf wird über ein Drosselventil von Reaktionsdruckniveau auf leichten Überdruck entspannt. Das dabei freigesetzte Gas wird in einem Abscheider abgetrennt. Die Flüssigkeit läuft in einen Pufferbehälter ab und wird von dort einer zweistufigen Hydrozyklon-Batterie zugeführt.

### Erster Hydrozyklon

Der Oberlauf der ersten Hydrozyklon-Stufe geht mit einem Restgehalt von 10 bis 1000 Gew.-ppm Raney-Nickel in den "Crude HMD-tank" und geht anschließend nach der erfindungsgemäßen Entfernung von Raney-Nickel über einen Hochgradient-Magnetfilter in die erste Destillations-Kolonne der HMD-Aufarbeitung. Erfindungsgemäß wird der Oberlauf der ersten Hydro-Zyklonstufe auf die erste Aufarbeitungskolonne geleitet. Der Nickelgehalt dieses Stromes lässt sich erfindungsgemäß auf weniger als 5 Gew.-ppm absenken.

### Zweiter Hydrozyklon

Der Unterlauf der ersten wird der zweiten Hydrozyklon-Stufe zugeführt, deren Oberlauf zurück in den Pufferbehälter geht. Der an Katalysator aufkonzentrierte Unterlauf der zweiten Stufe gelangt in einen Absetz-Behälter und von dort zur Katalysatorausschleusung.

Das sich im Katalysatorausschleusekessel ("Hydrocyclone Tails Settler") ansammelnde Katalysator-Sediment wird periodisch in einen zweiten Rührkessel abgelassen, in dem der Katalysator in einem mehrstufigen Batch-Verfahren von HMD befreit und in Wasser resuspendiert wird. Die Ausschleusung des gebrauchten Katalysators erfolgt über ein Absetzbecken, aus dem der Katalysator mit einer Ausgangsschnecke wasserfeucht in Fässer abgefüllt und dem Recycling zugeführt wird. Die überstehende wässrige Flüssigkeit wird erfindungsgemäß bevorzugt ebenfalls über einen Magnetfilter geleitet. Der Nickelgehalt der überstehenden Flüssigkeit kann auch hier auf weniger als 5 ppm gesenkt werden.

### Figuren

Figur 1 zeigt das Funktionsprinzip eines erfindungsgemäß einsetzbaren Hochgradient-magnetfilters. In Figur 1 bedeuten:
   - FM: Filtermatrix
   - EK: Eisenkreis
   - MR: magnetischer Rotor
Figur 2 zeigt ein Verfahrensschema für die Herstellung von HMD aus Adipodinitril, ohne das erfindungsgemäße Abtrennverfahren. In Figur 2 bedeuten:
   - H2: Wasserstoff
   - ADN: Adipodinitril
   - H2 (R): Wasserstoff zur Rückführung
   - LS: Leichtsieder
   - HS: Hochsieder
   - VK: verbrauchter Katalysator
Figur 3 zeigt ein Verfahrensschema zur Herstellung von HMD aus ADN mit nachgeschalteter Katalysatorabtrennung.
Figur 4 zeigt einen schematischen Aufbau des in den Beispielen verwendeten Versuchsaufbaus. In Figur 4 bedeuten:
   - R1: temperierbare Vorlage
   - F1: Magnetfilter
   - M: Rührer
Figur 5 zeigt die Magnetfilter-Abscheidegradverläufe zu Beispiel 1. Die Versuchsbedingungen sind: HMD, feine Matrix, ca. 90 Gew.-ppm Kat.
Figur 6 zeigt die Magnetfilter-Abscheidegradverläufe zu Beispiel 2. Die Versuchsbedingungen sind: Wasser, x₅₀ = 3,4 µm, ca. 130 Gew.-ppm Kat.

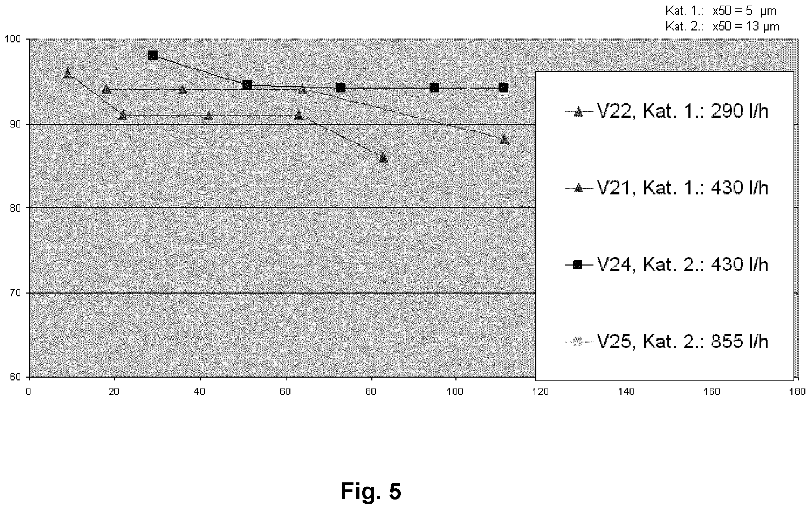

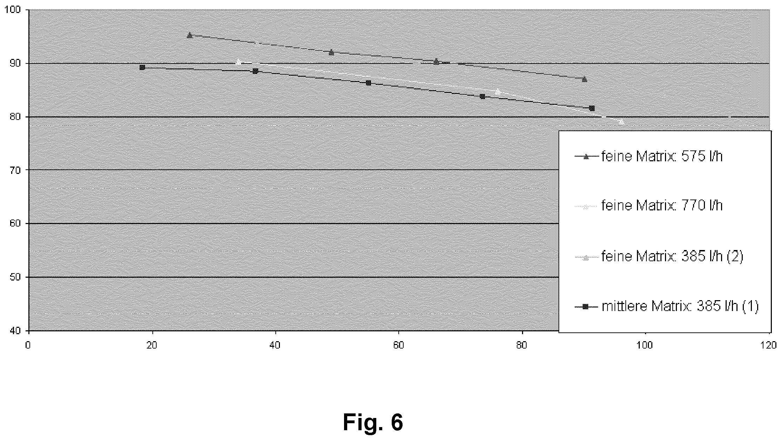

In den Figuren 5 und 6 ist auf der y-Achse jeweils der Abscheidegrad in Gew.-% und auf der x-Achse jeweils das Suspensionsvolumen in I aufgetragen.

### Beispiele

Die vorliegenden Beispiele sollen die vorliegende Erfindung näher beschreiben, ohne einschränkend zu wirken.

### Beispiel 1

Als Einsatzstoff wird Raney-Nickel enthaltendes Roh-HMD eingesetzt, das aus einer industriellen Anlage zur Niederdruck-Hydrierung von ADN, und zwar aus dem Oberlauf des ersten Hydrozyklons stammt. Der Einsatzstoff enthält 90 Gew.-ppm Raney-Nickel, ermittelt durch AAS-(Atom-Absorptionsspektrometrie)-Analyse. Die mittlere Partikelgröße des Raney-Nickels beträgt 5 bzw. 13 µm, bestimmt durch Messung mittels Laser-Beugung (Master Sizer 2000, Firma Malvern).

Der Einsatzstoff wird mittels eines Hochgradient-Magnetfilters (Typ HGF10) der Firma Steiner gereinigt.

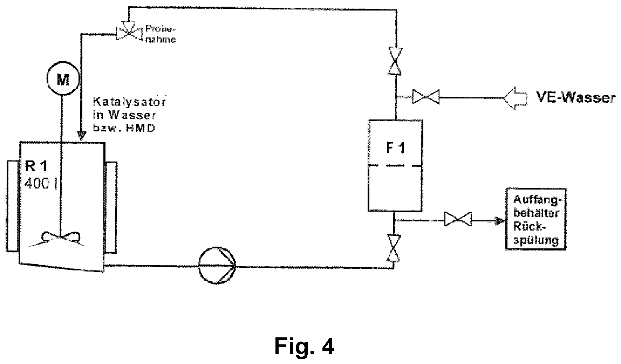

Figur 4 zeigt schematisch den Versuchsaufbau. In einer gerührten, temperierbaren 400-I-Vorlage (R1) wird das Roh-HMD angesetzt. Der Magnetfilter (F1) befindet sich in einem mit einer Pumpe betriebenen Umpump-Kreis. Das Rückspülen des beladenen Filters erfolgt mit VE-Wasser in einen Auffangbehälter. Entsprechende PLT-Einrichtungen ermöglichen die Mengeneinstellungen im Umpump-Kreis, das Erfassen des Druckverlustes des Filters und der Rückspül-Wassermenge sowie die Temperierung der Anlage. Folgende Filtermatrix wird in diesem Filter eingesetzt.

| | |
|---|---|
| Matrix (L x B x T): | 20 x 80 x 100 mm |
| Matrixfläche: | 1600 mm² |
| Matrixmaschenweite: | 0,5 mm, 1,0 mm, 1,5 mm |

Alle Versuche werden bei 25 °C und ca. 1 bar (absolut) Filterdruck durchgeführt. Die erzielten Versuchsergebnisse sind jedoch unabhängig vom Filtratdruck. Der Filtratdruck wird nur durch den maximal zulässigen Betriebsdruck des Filtergehäuses (abzüglich des Differenzdruckes während der Filtration) limitiert. Die Abscheideleistung wird durch die magnetischen Materialeigenschaften der Filtermatrix und des Eisenkreises des Hochmagnetfilters limitiert. Für eine gute Abscheiderate sollte daher bei den derzeitig eingesetzten Materialien eine Betriebstemperatur von 80 °C nicht überschritten werden. Bei der erfindungsgemäßen Verwendung anderer Materialen, deren magnetischen Materialeigenschaften sich oberhalb von 80 °C nicht oder nur unwesentlich verschlechtern, kann bei höheren Betriebstemperaturen gearbeitet werden.

Die magnetische Flussdichte des Testfilters beträgt 0,3 T (25 mm Pol-Abstand). Die Filtermatrix ist mit Drahtgewebelagen aus dem Werkstoff X6Cr17 (ferromagnetischer Edelstahl) gepackt.

### Versuchsergebnisse

Über den Magnetfilter wird ein Volumenstrom von 0,290 bis 0,855 m³/h HMD mit ca. 90 Gew.-ppm Katalysatorpartikeln bei einer Temperatur von 25 °C und 1 bar (abs.) gefahren. Die Verweilzeit in der Filtermatrix beträgt dabei 0,68 bis 2 Sekunden.

Der Abscheidegrad für einen Strom von 0,29 m³/h, der Katalysatorpartikel mit einer mittleren Partikelgröße von 5 µm enthält, beträgt 90 bis 95 %, entsprechend einer Restmenge von 4,5 Gew.-ppm (siehe Figur 5).

Die Abscheidegrade sind erwartungsgemäß für die feinstrukturierte Filtermatrix mit 0,5 mm Maschenweite (dreieckige Symbole) besser als für die größere Filtermatrix mit 1,0 mm Maschenweite (quadratische Symbole). Mit zunehmender Beladung sinkt der Abscheidegrad, bedingt durch die zunehmende Schwächung des Magnetfeldgradienten sowie die Verschlechterung der Strömungsbedingungen in der Filtermatrix. Ebenso sinken die Abscheidegrade mit höherer Flüssigkeitsbelastung der Matrix (realisierte Anströmgeschwindigkeit von 3,2 bis 9,4 cm/s).

Die Abscheidegrade des Magnetfilters werden durch Bestimmung der partikulären Nickelkonzentration nach dem Filter (keine Anteile von gelöstem Nickel im HMD) bei angelegtem und nicht angelegtem Magnetfeld ermittelt. Durch diese Vorgehensweise wird sichergestellt, dass ausschließlich der magnetische Abscheidegrad Berücksichtigung findet. Außerdem zeigt ein eigens über längere Zeit ohne Magnetfeld durchgeführter Versuch, dass eine mechanische Filtration ohnehin nicht in signifikantem Umfang stattfindet (stabile Austrittskonzentration, da kein Druckverlustanstieg).

Das Speichervermögen der Filtermatrix beträgt für den Bereich noch moderater Verschlechterungen des Abscheidegrads etwa 5 g Katalysator (gröbere Matrix) bis etwa 7,5 g Katalysator (feine Matrix) je 100 cm³ Matrixvolumen.

In allen Fällen kann die beladene Matrix durch einen Rückspül-Stoß mit etwa 1 I Wasser pro Sekunde (Dauer 3 bis 4 Sekunden) weitgehend abgereinigt werden. Wiederholungen des Rückspülvorgangs geben einen nur geringfügig zusätzlichen Katalysatoraustrag. Nach Beendigung der Versuche ist keine bleibende Erhöhung des Grunddruckverlustes der Matrix zu erkennen.

### Beispiel 2

Als Einsatzstoff dient in Wasser suspendiertes, gemahlenes Raney-Nickel (x₅₀ = ca. 3,4 µm). Das Mahlen erfolgt in einer Rührwerksmühle.

Die Versuchsapparatur entspricht Beispiel 1.

### Versuchsergebnisse

Über den Magnetfilter wird ein Volumenstrom von 0,385 bis 0,77 m³/h wässriger Suspension mit ca. 130 Gew.-ppm Katalysatorpartikel mit einer mittleren Partikelgröße von 3,4 µm bei einer Temperatur von 25 °C und 1 bar gefahren. Die Verweilzeit in der Filtermatrix beträgt dabei 0,75 bis 1,5 Sekunden.

Der Abscheidegrad für einen Strom von 0,385 m³/h beträgt 90 bis 95 %, entsprechend einer Restmenge von 6,5 Gew.-ppm. Die Abscheidegrade sind erwartungsgemäß für die fein strukturierte Filtermatrix mit 0,5 mm Maschenweite (dreieckige Symbole) besser als für die gröbere Filtermatrix mit 1,0 Maschenweite (quadratische Symbole). Mit zunehmender Beladung sinkt der Abscheidegrad, bedingt durch die zunehmende Schwächung der Magnetfeldgradienten sowie die Verschlechterung der Strömungsbedingungen in der Filtermatrix. Ebenso sinken die Abscheidegrade mit höherer Flüssigkeitsbelastung der Matrix (realisierte Anströmgeschwindigkeit von 4,3 bis 8,6 cm/s).

Die Abscheidegrade des Magnetfilters werden erneut durch Bestimmung der partikulären Nickelkonzentration nach dem Filter (keine Anteile von gelöstem Nickel im Wasser) bei angelegtem und nicht angelegtem Magnetfeld ermittelt.

In allen Fällen konnte die beladene Matrix durch einen Rückspül-Stoß mit etwa 1 I Wasser pro Sekunde (Dauer über 3 bis 4 Sekunden) weitgehend abgereinigt werden. Wiederholungen des Rückspülvorgangs ergeben einen nur geringfügig zusätzlichen Katalysatoraustrag.

Der Versuch zeigt am Beispiel von Raney-Nickel, dass ferromagnetische Katalysatorpartikel mit Hilfe von Magnetfiltern auch aus wässrigen Suspensionen oder Emulsionen abgetrennt werden können.

### Beispiel 3:

Beispiel 3 zeigt, dass bei einer thermischen Belastung von Hexamethylendiamin (HMD) in Gegenwart einer erfindungsgemäß geringen Menge an Katalysator (z. B. < 5 Gew.-ppm), der aus der zuvor durchgeführten Hydrierung stammt, wie sie beispielsweise in einer zur Reinigung des Produktes eingesetzten Destillationskolonne erfolgt, signifikant weniger Nebenprodukte gebildet werden, so dass zum einen die Reinheit des Produktes als auch die Ausbeute an gewünschtem Produkt steigt. HMD wurde unter Stickstoff als Inertgas in Gegenwart von suspendiertem Raney-Nickel gerührt. Beispielhaft wird die Konzentration von Tetrahydroazepin (THA) 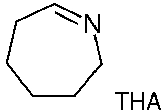 als gebildetes Nebenprodukt nach bestimmten Zeiten bestimmt. Das Nebenprodukt THA lässt sich im Allgemeinen nur mit hohem Destillationsaufwand von Hexamethylendiamin abtrennen, siehe WO 01/66514, Seite 1, Zeilen 31 bis 39

Die THA-Menge in Rein-HMD sollte 100 ppm nicht überschreiten (Ullmann's Encyclopedia of Industrial Chemistry, 6. vollständige überarbeitete Fassung, Band 16, Seite 435, Spalte 1).

### Beispiel 3.1 (Vergleichsbeispiel)

Reines HMD wird bei 180 °C mit 1 Gew.-%, entsprechend 10.000 Gew.-ppm, Raney-Ni, drucklos unter Stickstoff als Schutzgas gerührt.

| t (min) | c (THA) in Gew.-% |
|---|---|
| 0 | 0,05 |
| 34 | 2,08 |
| 82 | 3,35 |
| 292 | 5,72 |

Daraus folgt eine Bildungsrate für THA von ca. 0,7 Gew.-%/h

### Beispiel 3.2 (Vergleichsbeispiel)

Reines HMD wird bei 150 °C mit 1 Gew.-%, entsprechend 10.000 Gew.-ppm, Raney-Ni, drucklos unter Stickstoff als Schutzgas gerührt.

| t (min) | c (THA) in Gew.-% |
|---|---|
| 0 | 0,14 |
| 8 | 0,42 |
| 75 | 1,69 |
| 221 | 2,26 |
| 363 | 4,19 |

### Beispiel 3.3 (erfindungsgemäß)

Reines HMD wird bei 200 °C ohne Raney-Ni (d.h. < 5 Gew.-ppm Raney-Nickel), drucklos unter Stickstoff als Schutzgas gerührt.

| t (min) | c (THA) in Gew.-% |
|---|---|
| 0 | 0,06 |
| 1440 | 0,10 |
| Beispiel 3.4 (Vergleichsbeispiel) | |

Reines HMD wird bei 180 °C mit 65 Gew.-ppm Raney-Ni drucklos unter Stickstoff als Schutzgas gerührt.

| t (min) | c (THA) in Gew.-% |
|---|---|
| 0 | 0,06 |
| 10 | 0,15 |
| 60 | 0,40 |
| 180 | 0,60 |
| 420 | 1,14 |

Der Versuch zeigt, dass auch bei einem geringen Gehalt an Raney-Ni beträchtliche Mengen Tetrahydroazepin (THA) entstehen. Der THA-Gehalt des HMD wurde in allen Versuchen von Beispiel 3 gaschromatographisch bestimmt.

### Beispiel 4 (erfindungsgemäß)

Zwei parallel geschaltete rückspülbare Magnetfilter des Typs Automag skid AM12/SKID1 der Fa. Eclipse Magnetics Ltd. wurden in einer industriellen Anlage zur Niederdruck-Hydrierung von ADN getestet. Dabei wurde der Oberlauf des ersten Hydrozyklons (Raney-Nickel enthaltendes Roh-HMD) kontinuierlich in einen Tank gefahren, in dem ein Teil der Katalysatorpartikel agglomerierte. Aus dem Tank wurden kontinuierlich jedem der beiden Magnetfilter 6 t/h (ca. 7,3 m³/h) Raney-Nickel enthaltendes Roh-HMD mit 70-100°C zugefahren. Die Verweilzeit im Tank mit einem Volumen von 55 m³ betrug ca. 3,5 h.

Der Zulauf zum Tank enthielt während der Versuche 30-60 Gew.-ppm Raney-Nickel, ermittelt durch AAS-(Atom-Absorptionsspektrometrie)-Analyse. Die Raney-Nickel Partikelgröße im Zulauf zum Tank betrug ca. 5 bzw. 13 µm.

Der Ablauf des Tanks enthielt ungefähr 30-60 Gew.-ppm Raney-Nickel. Die mittlere Partikelgröße des Raney-Nickels im Ablauf des Tanks betrug 30-80 µm. Der Ablauf des Tanks wurde mittels Magnetfilter (Typ Automag skid AM12/SKID1, Firma Eclipse Magnetics Ltd.) vom Katalysator gereinigt.

Die Magnetfilter wurden zur Abreinigung alle 12-24 h mit der Zulaufsuspension gespült. Hierfür wurden in den Filtern zunächst die Permanentmagnete im Inneren der magnetisierten Metallröhren nach oben gezogen und der Hahn zum Ausschleusen des Feststoffs geöffnet.

Die erzielten Versuchsergebnisse sind unabhängig vom Filtratdruck. Der Filtratdruck wird gemäß diesem Beispiel nur durch den maximal zulässigen Betriebsdruck des Filtergehäuses limitiert. Die Abscheideleistung wird gemäß diesem Beispiel durch die magnetischen Materialeigenschaften der Filtereinbauten und des Permanentmagnete des Magnetfilters limitiert. Gemäß diesem Beispiel verringert sich die Abscheiderate zunächst auch bei etwas niedrigeren Zulauftemperaturen nicht. Da sich die auf die Partikel wirkende magnetische Flussdichte gemäß diesem Beispiel bei Temperaturen < 70-100°C erhöht, wird die bei niedrigeren Temperaturen etwas zunehmende Viskosität, die die Partikelabscheidung etwas verschlechtert, kompensiert.

Bei der erfindungsgemäßen Verwendung anderer Materialen, deren magnetischen Materialeigenschaften sich oberhalb von 100 °C nicht oder nur unwesentlich verschlechtern, kann erfindungsgemäß auch bei höheren Betriebstemperaturen gearbeitet werden.

### Versuchsergebnisse

Dem Magnetfilter (Automag skid AM12/SKID1) wird ein Volumenstrom von ca. 7,3 m³/h HMD mit ca. 30-60 Gew.-ppm Katalysatorpartikeln bei einer Temperatur von 70-100 °C und 1-5 bar (abs.) gefahren.

Der Abscheidegrad für einen Strom von 7,3 m³/h, der Katalysatorpartikel mit einer mittleren Partikelgröße von ca. 30-80 µm enthält, beträgt ca. 75%, entsprechend einer Restmenge von 8-15 Gew.-ppm.

Mit zunehmender Beladung der Filter sinkt der Abscheidegrad, bedingt durch die zunehmende Schwächung des Magnetfeldgradienten sowie die Verschlechterung der Strömungsbedingungen im Filter. Ebenso sinken die Abscheidegrade bei einem höheren Zulaufstrom zum Filter. Im umkehrten Fall erhöht sich der Abscheidegrad bei einem reduzierten Zulaufstrom. Ferner können bei einem kleineren Zulaufstrom feinere Katalysatorpartikel abgetrennt werden.

Das Speichervermögen des Magnetfilters (Automag skid AM12/SKID1) beträgt in Abhängigkeit der Partikelgröße ca. 4-6 kg, max. 12 kg.

In allen Fällen kann der beladene Magnetfilter durch einen Spülstoß weitgehend abgereinigt werden. Wiederholungen des Rückspülvorgangs geben einen nur geringfügig zusätzlichen Katalysatoraustrag. Nach Beendigung der Versuche ist keine bleibende Erhöhung des Grunddruckverlustes des Filters zu erkennen.

## Patentansprüche

1. Verfahren, umfassend mindestens die Schritte:
(A) Chemische Reaktion mindestens einer organischen Verbindung in Gegenwart mindestens eines heterogenen Katalysators in einem Reaktionsgemisch, **dadurch gekennzeichnet, daß** in Schritt (A) Adipodinitril (ADN) zu Hexamethylendiamin (HMD) oder 6-Aminocapronitril (6-ACN) und Hexamethylendiamin (HMD) hydriert wird, daß der mindestens eine heterogene Katalysator ein Metall, ausgewählt aus der Gruppe bestehend aus NI, Fe, Co und Mischungen davon, enthält und daß der mindestens eine heterogene Katalysator eine Partikelgrößen-Verteilung von 0,1 bis 5000 µm, bevorzugt 1 bis 1000 µm, besonders bevorzugt 1 bis 100 µm aufweist, und
(B) Abtrennen des mindestens einen heterogenen Katalysators mit einem Magnetfilter, wobei der Magnetfilter ein rückspülbarer Magnetfilter, beispielsweise ein Hochgradient-Magnetfilter oder Automag Magnetfilter, oder ein Nasstrommelscheider ist und der Gehalt an mindestens einem heterogenen Katalysator in dem Reaktionsgemisch, welches in Schritt (B) des erfindungsgemäßen Verfahrens eingesetzt wird, bevorzugt 6 bis 10000 Gew.-ppm, besonders bevorzugt 10 bis 1000 Gew.-ppm, ganz besonders bevorzugt etwa 20 bis 500 Gew-ppm, jeweils bezogen auf die zu behandelnde Reaktionsmischung, beträgt, wobei vor Schritt (B) ein Teil des mindestens einen heterogenen Katalysators abgetrennt wird und das Abtrennen vor Schritt (B) durch Abtrennung im Zentrifugalfeld erfolgt.

2. Verfahren nach Anspruch 1, **dadurch gekennzeichnet, dass** das Abtrennen vor Schritt (B) mit mindestens einem Hydrozyklon und/oder mindestens einem Tellerseparator erfolgt.

3. Verfahren nach einem der Ansprüche 1 bis 9, **dadurch gekennzeichnet, dass** der in der Reaktionsmischung gemäß Schritt (A) vorliegende mindestens eine heterogene Katalysator agglomeriert wird.

## Claims

1. A process comprising at least the steps:
(A) chemical reaction of at least one organic compound in the presence of at least one heterogeneous catalyst in a reaction mixture, wherein adipodinitrile (ADN) is hydrogenated to hexamethylenediamine (HMD) or 6-aminocapronitrile (6-ACN) and hexamethylenediamine (HMD) in step (A), wherein the at least one heterogeneous catalyst comprises a metal selected from the group consisting of Ni, Fe, Co and mixtures thereof and wherein the at least one heterogeneous catalyst has a particle size distribution of from 0.1 to 5000 µm, preferably from 1000 µm, particularly preferably from 1 to 100 µm, and
(B) removal of the at least one heterogeneous catalyst by means of a magnetic filter, the magnetic filter being a magnetic filter which can be backwashed, for example a high-gradient magnetic filter or Automag magnetic filter, or a wet drum separator and the content of at least one heterogeneous catalyst in the reaction mixture which is used in step (B) of the process of the invention being preferably from 6 to 10 000 ppm by weight, particularly preferably from 10 to 1000 ppm by weight, very particularly preferably from about 20 to 500 ppm by weight, in each case based on the reaction mixture to be treated, part of the at least one heterogeneous catalyst being separated off before step (B) and the removal before step (B) being carried out by separation in a centrifugal field.

2. The process according to claim 1, wherein the removal before step (B) is carried out using at least one hydrocyclone and/or at least one plate separator.

3. The process according to any of claims 1 to 9, wherein the at least one heterogeneous catalyst present in the reaction mixture according to step (A) is agglomerated.

## Revendications

1. Procédé, comprenant au moins les étapes suivantes :
(A) la réaction chimique d'au moins un composé organique en présence d'au moins un catalyseur hétérogène dans un mélange réactionnel, **caractérisé en ce qu'**à l'étape (A), de l'adipodinitrile (ADN) est hydrogéné en hexaméthylène-diamine (HMD) ou 6-aminocapronitrile (6-ACN) et hexaméthylène-diamine (HMD), **en ce que** ledit au moins un catalyseur hétérogène contient un métal choisi dans le groupe constitué par Ni, Fe, Co et leurs mélanges, et **en ce que** ledit au moins un catalyseur hétérogène présente une distribution des tailles de particules de 0,1 à 5 000 µm, de préférence de 1 à 1 000 µm, de manière particulièrement préférée de 1 à 100 µm, et
(B) la séparation dudit au moins un catalyseur hétérogène avec un filtre magnétique, le filtre magnétique étant un filtre magnétique lavable par inversion de courant, par exemple un filtre magnétique à gradient élevé ou un filtre magnétique Automag, ou un séparateur rotatif humide, et la teneur en ledit au moins un catalyseur hétérogène dans le mélange réactionnel qui est utilisé à l'étape (B) du procédé selon l'invention étant de préférence de 6 à 10 000 ppm en poids, de manière particulièrement préférée de 10 à 1 000 ppm en poids, de manière tout particulièrement préférée d'environ 20 à 500 ppm en poids, à chaque fois par rapport au mélange réactionnel à traiter, une partie dudit au moins un catalyseur hétérogène étant séparée avant l'étape (B) et la séparation avant l'étape (B) ayant lieu par séparation dans un champ centrifuge.

2. Procédé selon la revendication 1, **caractérisé en ce que** la séparation avant l'étape (B) a lieu avec au moins un hydrocyclone et/ou au moins un séparateur à plateaux.

3. Procédé selon l'une quelconque des revendications 1 à 9, **caractérisé en ce que** ledit au moins un catalyseur hétérogène présent dans le mélange réactionnel selon l'étape (A) est aggloméré.
